# EUROPEAN PATENT APPLICATION

(11) **EP 3 279 642 A1**
(43) Date of publication of application: **07.02.2018**
(21) Application number: 17168860.9
(22) Date of filing: 28.04.2017
(51) Int. Cl.: G01N 21/65, G01J 3/44

(54) **PORTABLE RAMAN DEVICE**

(30) Priority: 04.08.2016 CN 201610634478
(71) Applicant: Nuctech Company Limited, TongFang Building, Shuangqinglu, Haidian District Beijing 100084 (CN)
(72) Inventor: ZHANG, Li, Haidian District, Beijing 100084 (CN); ZHAO, Ziran, Haidian District, Beijing 100084 (CN); ZHANG, Jianhong, Haidian District, Beijing 100084 (CN); WANG, Hongqiu, Haidian District, Beijing 100084 (CN); ZHANG, Yubo, Haidian District, Beijing 100084 (CN); LIU, Haihui, Haidian District, Beijing 100084 (CN)
(74) Representative: Boult Wade Tennant

(57) **Abstract**

The disclosure provides a portable Raman device that includes a laser for emitting exciting light; a spectrometer for receiving Raman scattered light and converting the Raman scattered light into an electrical signal after beam splitting; a probe for leading the exciting light to irradiate on a sample and collect the Raman scattered light of the sample; and a fiber system connected between the laser and the probe as well as between the probe and the spectrometer so as to conduct light transmission. In comparison to conventional Raman devices, the portable Raman device of the disclosure has a simplified optical system, such that placement of components of the Raman device are more flexible, the whole size of the Raman device is reduced, and thus requirements of size miniaturization and quick real-time measurement are satisfied.

## Description

### FIELD

The present disclosure generally relates to a field of Raman spectroscopy, and more particularly relates to a portable Raman device.

### BACKGROUND

Raman spectra are a type of molecular vibrational spectra, which can indicate fingerprint features of molecules, and may be used to inspect materials. A Raman device can inspect and identify materials by collecting Raman spectra that are produced due to Raman scattering by exciting light on an object. The Raman device has been widely applied in various fields such as liquid security check, jewelry inspection, explosive detection, drug detection, medicine inspection, and the like.

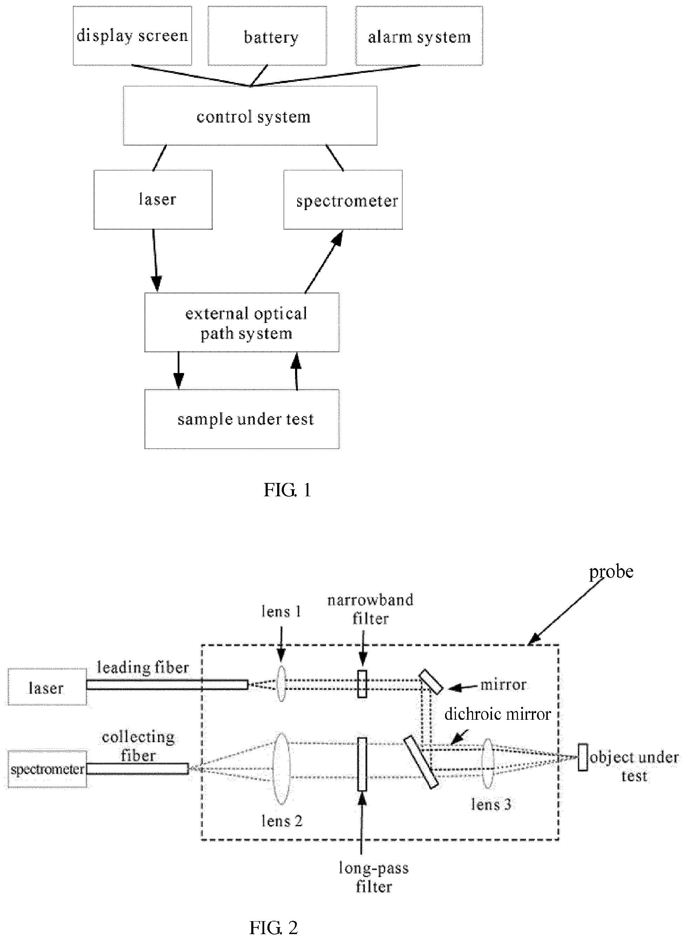

Normally, Raman device generally includes three components: a laser, an external light path system and a spectrometer. Exciting light emitted from the laser passes through the external light path and irradiates a sample to produce Raman scattered light. The Raman scattered light is transmitted to the spectrometer through the external light path, and then converted into an electrical signal after beam splitting. In addition, as shown in Fig. 1, the prior Raman device may further include a control system connected to the laser and the spectrometer so as to adjust the laser and the spectrometer. The control system is also connected to a monitor for human-machine interaction, a battery for providing power to the spectrometer and an alarm system for giving an alarm when an exception occurs in the spectrometer.

The prior art Raman device has the following disadvantages. Conventional light path elements are utilized to transmit light beams between the laser and the external light path system as well as between the external light path system and the spectrometer. These light path elements have limitations in aspects of position, size and the like. As a result, the prior art Raman device as a whole has a relatively large size and is not suitable for on-site use in view of its detection manner and instrument installation, and thereby cannot meet the need of portable detection in the industry.

### SUMMARY

The disclosure provides a portable Raman device which has a flexible placement of components and can meet the needs of portability and quick real-time measurements.

An embodiment of the disclosure provides a portable Raman device that includes a laser configured to emit exciting light; a spectrometer configured to receive Raman scattered light and convert the Raman scattered light into an electrical signal after beam splitting; a probe configured to lead the exciting light to irradiate on a sample and collect the Raman scattered light of the sample; and a fiber system connected between the laser and the probe as well as between the probe and the spectrometer so as to conduct light transmission.

In an embodiment, the optical fiber system includes a leading fiber between the laser and the probe and a collecting fiber between the probe and the spectrometer.

In an embodiment, the optical fiber system includes a fiber circulator having three ports that are respectively connected to the laser, the probe and the spectrometer via a fiber.

In an embodiment, a port of the fiber circulator is connected to a plurality of spectrometers respectively via a plurality of fibers.

In an embodiment, the optical fiber system includes a beam splitter, wherein one end of the beam splitter is connected to a port of the optical fiber circulator, and the other end of the beam splitter is connected to a plurality of probes respectively via a plurality of fibers.

In an embodiment, the probe includes a unidirectional mirror or a short-pass dichroic mirror for configuring light paths within the probe such that a light path of the exciting light is perpendicular to a light path of the Raman scattered light. The short-pass dichroic mirror may bring the similar effect as the unidirectional mirror.

In an embodiment, a light path within the probe is configured as an eccentric light path, in which an optical axis of an exciting light path is deviated from an optical axis of a collecting light path.

In an embodiment, the probe includes a notch filter or a dichroic mirror configured to filter out Rayleigh scattered light.

In an embodiment, the fiber is a single-stranded fiber or a multi-stranded fiber.

In an embodiment, fibers in the multi-stranded fiber are arranged as a strip having a single line of fibers or a strip having alternately arranged fibers.

In an embodiment, the fiber is a hollow-core photonic crystal fiber, which is formed by an arrangement of quartz rods and quartz capillaries. The cladding region of the fiber is composed of micro air periodically arranged and parallel to the axis of the fiber. The core of the fiber is a hollow core having air holes. The refractive index of the cladding is larger than that of the core.

In comparison to conventional Raman devices, the portable Raman device of the disclosure has a simplified optical system, such that placement of components of the Raman device is more flexible, the whole size of the Raman device is reduced, and thus requirements of size miniaturization and quick real-time measurement are satisfied.

### BRIEF DESCRIPTION OF THE DRAWINGS

Fig. 1 illustrates a structural schematic diagram of a prior art Raman device;
Fig. 2 illustrates a structural schematic diagram of a portable Raman device according to a first embodiment of the disclosure;
Fig. 3 illustrates a structural schematic diagram of a portable Raman device according to a second embodiment of the disclosure;
Fig. 4 illustrates a structural schematic diagram of a portable Raman device according to a variant of the second embodiment of the disclosure;
Fig. 5 illustrates a structural schematic diagram of a portable Raman device according to another variant of the second embodiment of the disclosure;
Fig. 6 illustrates a structural schematic diagram of a portable Raman device according to a third embodiment of the disclosure;
Fig. 7 illustrates a structural schematic diagram of a portable Raman device according to a fourth embodiment of the disclosure;
Fig. 8 illustrates a structural schematic diagram of a probe configured with a notch filter of a portable Raman device according to the disclosure; and
Fig. 9 illustrates a schematic diagram of an arrangement of optical fibers in a portable Raman device according to the disclosure.

### DETAILED DESCRIPTION

In the following, technical solutions of the disclosure will be further described in detail with reference to embodiments, in conjunction with accompanying drawings. In the description, a same or similar reference number denotes a same or similar component. The following description of the implementations of the disclosure with reference to the accompanying drawings is only for illustrating the general inventive conception of the disclosure, but should not be interpreted as a limit to the scope of the disclosure.

According to the general inventive conception of the disclosure, a portable Raman device includes a laser configured to emit exciting light; a spectrometer configured to receive Raman scattered light and convert the Raman scattered light into an electrical signal after beam splitting; a probe configured to lead the exciting light to irradiate on a sample and collect the Raman scattered light of the sample; and a fiber system connected between the laser and the probe as well as between the probe and the spectrometer so as to conduct light transmission.

Furthermore, for the sake of explanation, a number of specific details have been set forth to provide a comprehensive understanding of disclosed embodiments in the following detailed description. However, it is obvious that one or more embodiments can also be implemented without such specific details.

Fig. 2 schematically illustrates a structure of a portable Raman device according to a first embodiment of the disclosure. The portable Raman device may include a laser configured to emit exciting light. The laser is connected to a probe via a leading fiber. The leading fiber can lead the exciting light emitted from the laser to the probe. The probe may be used to lead the exciting light to irradiate on a sample and meanwhile collect Raman scattered light from the sample. The probe may be connected to the other end of the leading fiber to receive the exciting light from the laser. Light paths in the probe can be configured as follows: the exciting light emitted from the laser and leaded in via the leading fiber is reflected by a mirror and a dichroic mirror, after passing through a lens 1 and a narrowband filter in sequence, then passes through a lens 3 and finally irradiates an object. Raman scattering may occur on the object upon irradiation by the exciting light. The Raman scattered light may pass through the lens 3, the dichroic mirror and a long-pass filter in sequence, and then be focused by a lens 2. The probe may be connected to a spectrometer via a collecting fiber. After being focused by the lens 2, the Raman scattered light may be transmitted to the spectrometer. The spectrometer may perform beam splitting on the received Raman scattered light, and then convert the optical signal into an electrical signal. In the portable Raman device, the leading fiber and the collecting fiber compose a fiber system.

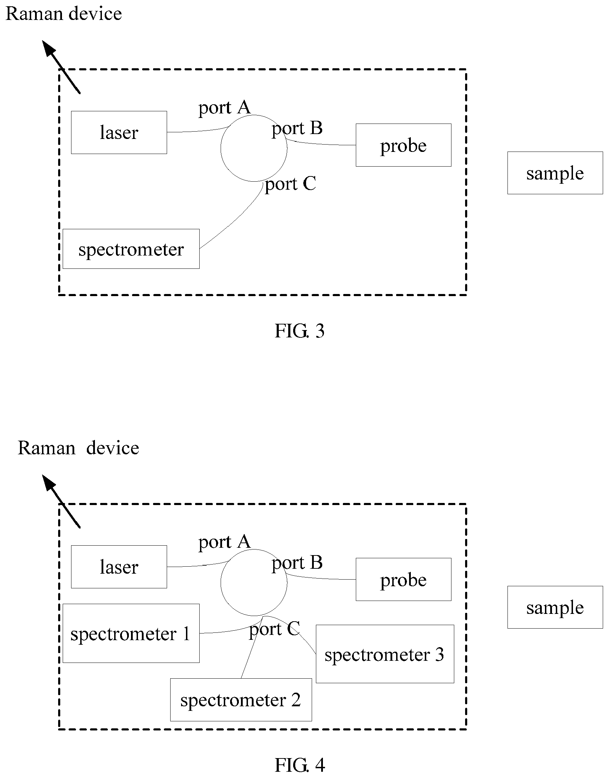

Fig. 3 illustrates a structural schematic diagram of a portable Raman device according to a second embodiment of the disclosure. The structure of the portable Raman device according to the second embodiment is almost the same as the structure of the portable Raman device according to the first embodiment, and the only difference is in the fiber system. In the first embodiment, the exciting light and the collected Raman scattered light are respectively transmitted via difference fibers. In contrast, in the second embodiment, both the exciting light inputted into the probe and the scattered light collected and output by the probe can be transmitted via a same fiber.

Specifically, the optical fiber system in the second embodiment can further include an optical fiber circulator having three ports that are respectively connected to the laser, the probe and the spectrometer via a fiber. As a result, the exciting light emitted from the laser can enter a port A of the optical fiber circulator via a fiber, come out from a port B after being transmitted by the fiber circulator, and then be transmitted to the probe via the fiber connected between the port B and the probe. Likewise, the Raman scattered light on a sample sensed by the probe can be transmitted back into the optical fiber circulator via the fiber connected between the port B and the probe, come out from a port C after being transmitted by the optical fiber circulator, and then be transmitted through a fiber connected between the port C and the spectrometer to the spectrometer for detection.

Fig. 4 illustrates a structural schematic diagram of a portable Raman device according to a variant of the second embodiment of the disclosure. The structure of the portable Raman device according to the variant of the second embodiment is almost the same as the structure of the portable Raman device according to the second embodiment, and the only difference is in the number of the fiber system(s) and spectrometer(s). In the second embodiment, the port C of the optical fiber circulator is connected to a single spectrometer via a single fiber. However, in the variant of the second embodiment, the port C of the fiber circulator may be connected with a plurality of fibers respectively connected to a plurality of spectrometers (e.g. spectrometers 1, 2 and 3). In this case, the spectrometers can be configured by a user with different performance parameters as needed, so as to be adapted to inspections in different situations. In Fig. 4, the port C is illustrated to be connected to three spectrometers. However, this is only an exemplary configuration of the port C which may be connected to any number of same or different spectrometers depending on the demands.

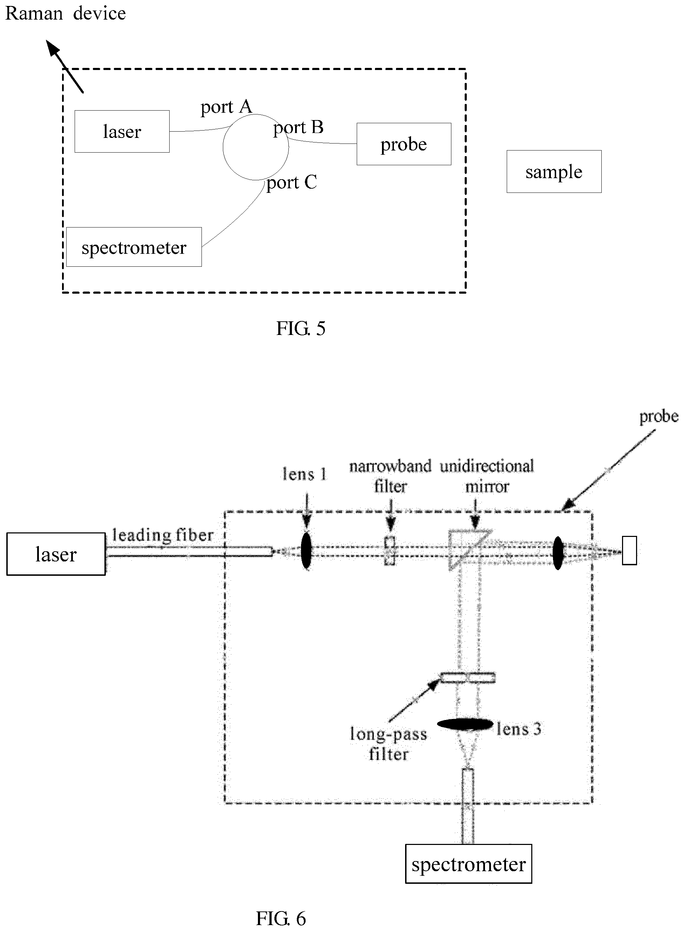

Fig. 5 illustrates a structural schematic diagram of a portable Raman device according to another variant of the second embodiment of the disclosure. The structure of the portable Raman device according to the another variant of the second embodiment is almost the same as the structure of the portable Raman device according to the second embodiment, and the only difference is in the number of the fiber system(s) and probe(s).

In the second embodiment, the port B of the optical fiber circulator is connected to a single probe via a single fiber. However, in the another variant of the second embodiment, the fiber system can further include a beam splitter. One end of the beam splitter is connected to the port B, and the other end of the beam splitter is connected with a plurality of fibers, each of which is connected to a probe. The plurality of probes may be disposed at different locations on a sample under test or disposed at different samples under test. As such, Raman scattered light at a plurality of collection points can be simultaneously collected and transmitted to the spectrometer for detection. Therefore, detection results of different locations of a sample under test or detection results of different samples under test may be obtained simultaneously and thus the operation efficiency can be improved.

Fig. 6 illustrates a structural schematic diagram of a portable Raman device according to a third embodiment of the disclosure. The structure of the portable Raman device according to the third embodiment is almost the same as the structure of the portable Raman device according to the first embodiment, and the only difference is in the configuration of light path in the probe.

Specifically, a unidirectional mirror may be provided behind the narrowband filter. The exciting light emitted from the laser and leaded in via the leading fiber passes through the lens 1, the narrow-band filter and the unidirectional mirror in sequence, and then irradiates an object under test. Raman scattering may occur on the object under test upon irradiation by the exciting light. The Raman scattered light may be reflected by the unidirectional mirror, then pass through the long-pass filter, and enter the fiber connected to the spectrometer after being focused by the lens 3. In this case, the unidirectional mirror can be configured to vertically reflect the light path of the Raman scattered light, such that the light paths of the exciting light and the Raman scattered light are perpendicular to each other. Accordingly, the long-pass filter and the focus lens 2 may be disposed at the vertical light paths of the Raman scattered light. As a result, the dichroic mirror may be omitted and a location for installing the spectrometer may be more flexible. A short-pass dichroic mirror may bring the similar effect as the unidirectional mirror.

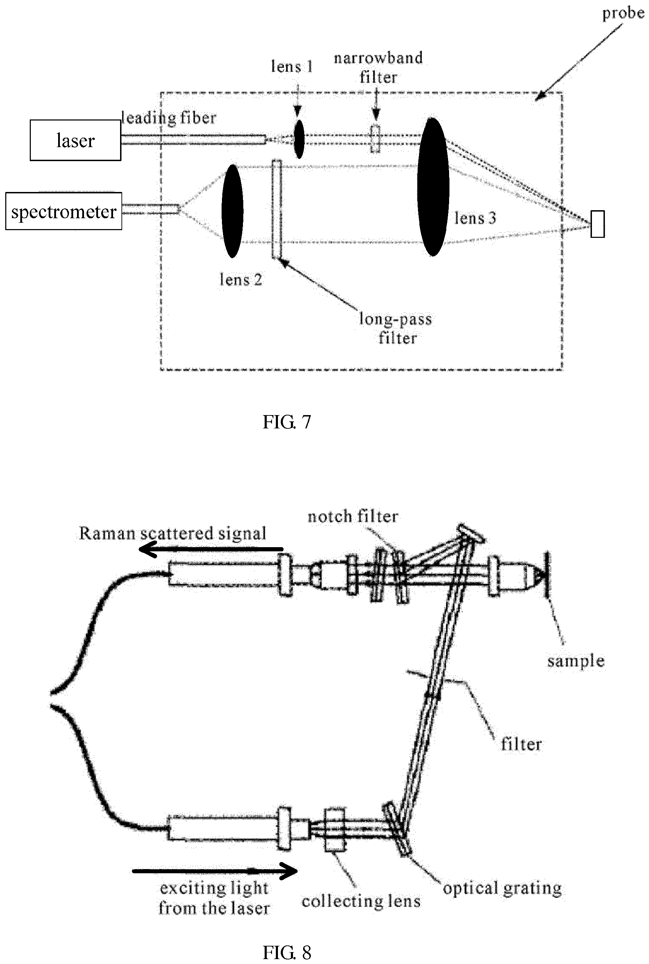

Fig. 7 illustrates a structural schematic diagram of a portable Raman device according to a fourth embodiment of the disclosure. The structure of the portable Raman device according to the fourth embodiment is almost the same as the structure of the portable Raman device according to the first embodiment, and the only difference is in the configuration of light paths in the probe. In Fig. 7, the light paths are eccentric light paths, in which an optical axis of an excitation light path is deviated from an optical axis of a collection light path.

Specifically, the exciting light emitted from the laser and leaded in via the leading fiber may become parallel light after passing through a lens 1. The parallel light may pass through a narrowband filter, and irradiate the sample after being focused by a lens 3. After that, the generated Raman scattered light may also be collected by the lens 3, pass through a long-pass filter and a lens 2, and then be transmitted to the spectrometer for detection through a fiber. The mirror has been omitted in such a configuration of light paths, which makes the light path within the probe shorter. Meanwhile, as for a packaged sample, positions on the package that are irradiated by the exciting light are not in the collection light path and thus interference on the detection caused by the package may be eliminated.

Fig. 8 illustrates a structural schematic diagram of a probe configured with a notch filter of a portable Raman device according to the disclosure. As illustrated, a notch filter is provided in a light path of the probe, such as, the collection light path. The notch filter may be configured to filter out Rayleigh scattered light having a wavelength within a range of several nanometers centered at the wavelength of the exciting light, and meanwhile let optical signals having a wavelength outside the range pass through. As such, the detection may be performed by a small laser and a small spectrometer, and therefore the whole system may be more compact.

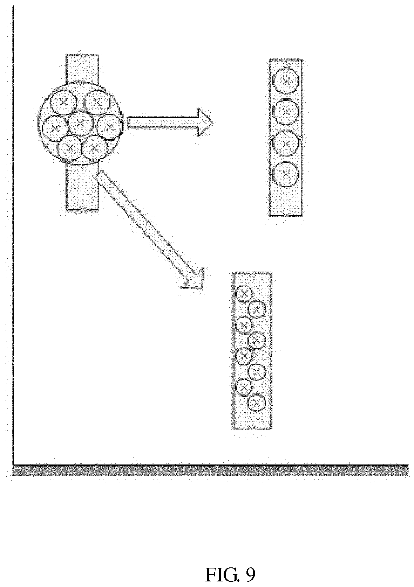

Fig. 9 illustrates a schematic diagram of an arrangement of fibers in a portable Raman device according to the disclosure. The fibers used in the optical spectrum detection device of the disclosure may be single-stranded fibers or multi-stranded fibers. Normal multi-stranded fibers are arranged in a circular form. Generally, the circle formed by the arrangement of multi-stranded fibers has a diameter larger than a width of an entrance slit in the spectrometer. As a result, a large amount of the transmitted Raman scattered light cannot enter the spectrometer, leading to a waste of the scattered light. As illustrated in Fig. 9, in the disclosure, a plurality of fiber can be arranged as a strip, specifically as a strip having a single line of fibers in the upper right part of Fig. 9 or a strip having alternately arranged fibers in the lower right part of Fig. 9.

Various types of fibers may be used in the fiber system of the spectrometer of the disclosure. For example, a hollow-core photonic crystal fiber can be used, which is formed by an arrangement of quartz rods and quartz capillaries. The cladding region of the hollow-core photonic crystal fiber is composed of micro air periodically arranged and parallel to the axis of the fiber. The core of the fiber is a hollow core having air holes. The refractive index of the cladding is larger than that of the core. The fiber has advantages of being fillable, having low loss, and the like. The impact strength of filled mediums in the fiber can be enhanced. Meanwhile, the optical loss can be significantly reduced by utilizing the fiber structure to restrict light.

According to the disclosure, an optical system in the conventional Raman device may be simplified by the introduction of fibers into the Raman device. The length of a fiber may be adjusted based on actual situations, such that the placement of components, such as, the laser, the probe and the like may be more flexible and the whole size of the device may be smaller. Therefore, the Raman device of the disclosure can meet the needs of size miniaturization and quick real-time measurement.

Although the embodiments of the disclosure have been described with reference to the accompanying drawings, the description is only for exemplarily illustrating preferred implementations of the disclosure, but should not be interpreted as a limit to the scope of the disclosure.

Some embodiments according to the general inventive conception of the disclosure have been illustrated and explained, but it is to be appreciated by those skilled in the art that various alternations can be made to these embodiments without departing from the principle and spirit of the general inventive conception, and the scope of the disclosure is limited by the appended claims and equivalence thereof.

## Claims

1. A portable Raman device, comprising:
a laser configured to emit exciting light;
a spectrometer configured to receive Raman scattered light and convert the Raman scattered light into an electrical signal after beam splitting;
a probe configured to lead the exciting light to irradiate on a sample and collect the Raman scattered light of the sample; and
a fiber system connected between the laser and the probe as well as between the probe and the spectrometer so as to conduct light transmission.

2. The portable Raman device of claim 1, wherein the optical fiber system includes a leading fiber between the laser and the probe and a collecting fiber between the probe and the spectrometer.

3. The portable Raman device of claim 1, wherein the optical fiber system includes a fiber circulator having three ports that are respectively connected to the laser, the probe and the spectrometer via a fiber.

4. The portable Raman device of claim 3, wherein a port of the fiber circulator is connected to a plurality of spectrometers respectively via a plurality of fibers.

5. The portable Raman device of claim 3, wherein the optical fiber system includes a beam splitter, wherein one end of the beam splitter is connected to a port of the optical fiber circulator, and the other end of the beam splitter is connected to a plurality of probes respectively via a plurality of fibers.

6. The portable Raman device of claim 1, wherein the probe includes a unidirectional mirror or a short-pass dichroic mirror for configuring light paths within the probe such that a light path of the exciting light is perpendicular to alight path of the Raman scattered light.

7. The portable Raman device of claim 1, wherein a light path within the probe is an eccentric light path, wherein an optical axis of an exciting light path is deviated from an optical axis of a collecting light path.

8. The portable Raman device of any of claims 1-7, wherein the probe includes a notch filter or a dichroic mirror configured to filter out Rayleigh scattering light.

9. The portable Raman device of any of claims 1-7, wherein the fiber is a single-stranded fiber or a multi-stranded fiber.

10. The portable Raman device of claim 9, wherein fibers in the multi-stranded fiber are arranged as a strip having a single line of fibers or a strip having alternately arranged fibers.
